(19) Europäisches Patentamt / European Patent Office / Office européen des brevets

(11) **EP 4 382 985 A1**

(12) **EUROPÄISCHE PATENTANMELDUNG**

(43) Veröffentlichungstag:
**12.06.2024 Patentblatt 2024/24**

(21) Anmeldenummer: **23214368.5**

(22) Anmeldetag: **05.12.2023**

(51) Internationale Patentklassifikation (IPC):
**G02B 23/10** (2006.01)    **F41G 1/00** (2006.01)

(52) Gemeinsame Patentklassifikation (CPC):
**G02B 23/10; F41G 11/00**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(30) Priorität: **06.12.2022   AT 509292022**

(71) Anmelder: **Swarovski-Optik AG & Co KG.
6067 Absam (AT)**

(72) Erfinder: **MAIER, Harald
6067 Absam (AT)**

(74) Vertreter: **Burger, Hannes
Anwälte Burger & Partner
Rechtsanwalt GmbH
Rosenauerweg 16
4580 Windischgarsten (AT)**

(54) **FERNOPTISCHE VORRICHTUNG**

(57)    Die Erfindung betrifft eine fernoptische Vorrichtung (1), insbesondere eines binokularen oder monokularen Fernrohrs, eines Spektivs, eines Teleskopes, Zielfernrohrs, Nachtsichtgerätes oder Entfernungsmessers, wobei die fernoptische Vorrichtung (1) dazu eingerichtet ist, zumindest ein mit der fernoptischen Vorrichtung aktuell erfasstes erstes Bild (23) mit zumindest einem davor mit der fernoptische Vorrichtung aufgezeichneten Referenzbild (22) auf Ähnlichkeit zu vergleichen und zumindest ein Maß für die Ähnlichkeit des zumindest einen aktuell erfassten Bildes (23) mit dem zumindest einen Referenzbild (22) zu berechnen und wenn das zumindest eine Maß der Ähnlichkeit zumindest einen vorgegebenen Wert (27) erreicht oder überschreitet oder unterschreitet, zumindest einen Hinweis (28) für einen Benutzer auszugeben.

**Fig.7**

EP 4 382 985 A1

**Beschreibung**

Die Erfindung betrifft eine fernoptische Vorrichtung, insbesondere in Form eines binokularen oder monokularen Fernrohrs, eines Spektivs, eines Teleskopes, Zielfernrohrs, Nachtsichtgerätes oder Entfernungsmessers.

Unter einer fernoptischen Vorrichtung wird ein optisches Instrument verstanden, durch welches entfernte Objekte für einen Betrachter um ein Vielfaches näher oder größer erscheinen, wobei durch die fernoptische Vorrichtung der Sehwinkel, unter dem das entfernte Objekt erscheint, gegenüber einer Betrachtung mit dem bloßen Auge vergrößert wird, wobei eine Entfernung zwischen Beobachter und Objekt mindestens zwei Meter beträgt. Dies gilt sowohl für Vorrichtungen mit einem direkten Blick durch die Vorrichtung (klassische analoge optische Geräte), als auch für elektronische Vorrichtungen mit einem Blick auf ein Display (digitale Geräte).

In unterschiedlichen jagdlichen Anwendungsbereichen, beispielsweise bei einer Drückjagd, kann es erforderlich sein, dass in einem bestimmten Bereich nicht geschossen werden darf, um andere Personen nicht zu gefährden. Ebenfalls relevant ist es, bei der Jagd Reviergrenzen einzuhalten. Aber auch in anderen Anwendungsfällen kann es wünschenswert sein, einen bestimmten durch eine fernoptische Vorrichtung betrachteten Bereich, beispielsweise ein Landmarke, wie eine Bergspitze, oder ein anderes Objekt, wie ein Tier, auch nach Verschwenken der fernoptischen Vorrichtung leicht wiederauffindbar zu machen.

Nachteilig an den bekannten Lösungen ist es, dass es für einen Benutzer schwierig ist, sicherheitskritische Bereiche oder Grenzen zu erkennen oder auch zuvor bereits betrachtete Objekte wieder zu finden.

Es ist daher eine Aufgabe die oben genannten Nachteile des Stands der Technik zu überwinden.

Diese Aufgabe wird mit einer fernoptischen Vorrichtung der eingangs genannten Art erfindungsgemäß dadurch gelöst, dass die fernoptische Vorrichtung dazu eingerichtet ist, zumindest ein mit der fernoptischen Vorrichtung aktuell erfasstes Bild mit zumindest einem davor mit der fernoptischen Vorrichtung aufgezeichneten Referenzbild auf Ähnlichkeit zu vergleichen und zumindest ein Maß für die Ähnlichkeit des zumindest eine aktuell erfassten Bildes mit dem zumindest einen Referenzbild zu berechnen und, wenn das zumindest eine Maß der Ähnlichkeit zumindest einen vorgegebenen Wert erreicht oder überschreitet oder unterschreitet, zumindest einen Hinweis für einen Benutzer auszugeben.

Gemäß einer vorteilhaften Variante der Erfindung kann es vorgesehen sein, dass der zumindest eine Hinweis ein optischer und/oder akustischer und/oder haptischer und/oder mechanisch und/oder elektromechanisch generierter Hinweis ist.

Weiters kann die fernoptische Vorrichtung dazu eingerichtet sein, das zumindest eine aktuell erfasste Bild mit zumindest zwei davor aufgezeichneten und zueinander unterschiedlichen Referenzbildern auf Ähnlichkeit zu vergleichen und, wenn das zumindest eine Maß für die Ähnlichkeit des zumindest einen aktuell erfassten Bildes mit einem der beiden Referenzbilder den zumindest einen vorgegebenen Wert überschreitet oder unterschreitet, den Hinweis auszugeben.

Gemäß einer vorteilhaften Weiterbildung kann es vorgesehen sein, dass ein erstes Referenzbild der zumindest zwei Referenzbilder eine erste Grenze eines Bereichs definiert und ein zweites Referenzbild der zumindest zwei Referenzbilder eine zweite Grenze des Bereichs definiert.

Bevorzugt kann die fernoptische Vorrichtung dazu eingerichtet sein, zu bestimmen, ob das aktuell erfasste Bild inner- oder außerhalb des Bereichs liegt.

Darüber hinaus kann die fernoptische Vorrichtung dazu eingerichtet sein, einen Hinweis zu generieren, ob sich das zumindest eine aktuell erfasste Bild inner- oder außerhalb des Bereichs befindet.

Die fernoptische Vorrichtung kann zumindest einen elektronischen Bilderfassungssensor, insbesondere in Form eines CCD- und/oder CMOS- und/oder Infrarotsensors, beispielsweise in Form eines Microbolometer-Sensors, aufweisen.

Gemäß einer bevorzugten Ausführungsform kann die fernoptische Vorrichtung dazu eingerichtet sein, zumindest eine erste Häufigkeitsverteilung von Werten zumindest eines charakteristischen Bildparameters in dem zumindest einen Referenzbild und zumindest eine zweite Häufigkeitsverteilung von Werten des zumindest einen charakteristischen Bildparameters in dem zumindest einen aktuell erfassten Bild zu ermitteln und die beiden Häufigkeitsverteilung miteinander zu vergleichen.

Weiter kann die fernoptische Vorrichtung dazu eingerichtet sein, zumindest einen Korrelationskoeffizienten aus der Häufigkeitsverteilung des zumindest einen Referenzbildes und der Häufigkeitsverteilung des zumindest einen aktuell erfassten Bildes als Maß für die Ähnlichkeit des zumindest einen aktuell erfassten Bildes mit dem zumindest einen Referenzbild zu berechnen.

Entsprechend einer vorteilhaften Variante kann die fernoptische Vorrichtung dazu eingerichtet sein, die zumindest eine erste Häufigkeitsverteilung und die zumindest eine zweite Häufigkeitsverteilung je in Form eines Histogramms zu berechnen.

Als besonders vorteilhaft hat sich erwiesen, dass der zumindest eine charakteristische Bildparameter ein Graustufen- und/oder Farbwert eines einzelnen Bildpunktes ist.

Weiters kann die fernoptische Vorrichtung dazu eingerichtet sein, aus dem zumindest einen Referenzbild und aus dem zumindest einen aktuell erfassten Bild je ein Graustufenbild zu ermitteln.

Die Benutzerfreundlichkeit lässt sich dadurch erhöhen, dass die fernoptische Vorrichtung zumindest eine Betätigungsvorrichtung aufweist, um eine Aufnahme des zumindest einen Referenzbildes auszulösen.

Bei einer bevorzugten Variante der Erfindung kann die fernoptische Vorrichtung dazu eingerichtet sein, das zumindest eine Referenzbild, insbesondere nach Eingabe eines Befehls zum Speichern des zumindest einen Referenzbildes, in einem internen Speicher der fernoptischen Vorrichtung zu speichern.

Gemäß einer vorteilhaften Weiterbildung kann die fernoptische Vorrichtung dazu eingerichtet sein, nach Eingabe eines Befehls und/oder Ausführen einer Aktion, wie beispielsweise einem Verschwenken der fernoptischen Vorrichtung kontinuierlich aktuell erfasste Bilder aufzuzeichnen und mit dem zumindest einen Referenzbild zu vergleichen.

Weiters kann es vorgesehen sein, dass die fernoptische Vorrichtung zumindest ein Objektiv und zumindest ein Okular aufweist.

Darüber hinaus kann die fernoptische Vorrichtung eine Ausgabeeinheit zur Ausgabe des Hinweises aufweisen, insbesondere in Form eines in zumindest einen Sichtkanal der fernoptischen Vorrichtung eingeblendeten oder angeordneten Displays oder einer einfacheren elektrooptischen Anzeigevorrichtung wie zum Beispiel einer LCD-Segmentanzeige oder einer LED.

Weiters kann die fernoptische Vorrichtung zumindest eine Steuerung, insbesondere in Form eines Prozessors aufweisen, die dazu eingerichtet ist, das Maß für die Ähnlichkeit des zumindest einen aktuell erfassten Bildes und des zumindest einen Referenzbildes zu berechnen sowie Erzeugung und Ausgabe des Hinweises zu steuern. Als Prozessor ist jedes elektronische Bauteil zu verstehen, welches programmiert werden und Daten auswerten kann, wie z.B. ein FPGA (Field Programmable Gate Array), ein ASIC, ein Mikrocontroller, ein Mikroprozessor oder ein Digital-Signal-Prozessor DSP, etc.

Zum besseren Verständnis der Erfindung wird diese anhand der nachfolgenden Figuren beispielhaft näher erläutert.

Es zeigen jeweils in stark vereinfachter, schematischer Darstellung:

Fig. 1    ein Blockschaltbild eines erfindungsgemäßen Fernrohres;

Fig. 2    eine Variante eines erfindungsgemäßen Fernrohrs;

Fig. 3    eine weitere Variante eines erfindungsgemäßen Fernrohrs, in Form eines digitalen Zielfernrohres;

Fig. 4    ein Blockschaltbild von Komponenten des Fernrohres aus Fig. 1;

Fig. 5    Häufigkeitsverteilungen eines Referenzbildes und eines aktuell erfassten Bildes,

Fig. 6    Korrelationskoeffizienten des Referenzbildes und aktuell erfasster Bilder und

Fig. 7    einen durch zwei Referenzbilder begrenzten Bereich.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Die Ausführungsformen sind figurenübergreifend beschrieben.

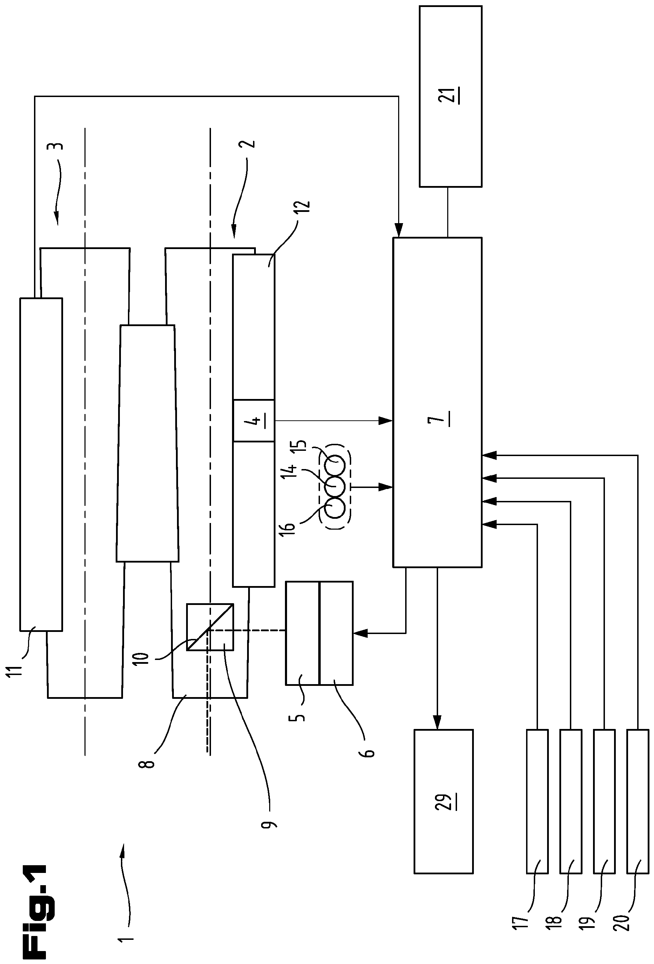

Gemäß Fig. 1 kann eine erfindungsgemäße fernoptische Vorrichtung 1 in Form eines binokularen oder monokularen Fernrohrs, eines Spektivs, eines Teleskopes, Zielfernrohrs, Nachtsichtgerätes oder Entfernungsmessers, einen Sichtkanal 2 oder zwei Sichtkanäle 2 und 3 sowie mindestens einen Bilderfassungssensor 4 aufweisen. Der Bilderfassungssensor 4 ist besonders bevorzugt Teil eines digitalen Kameramoduls bzw. einer Digitalkamera. Der Bilderfassungssensor 4 kann beispielsweise einen CCD-Sensor, einen CMOS- und/oder Infrarotsensor, insbesondere in Form eines Microbolometer-Sensors, umfassen oder als solcher ausgebildet sein.

Die fernoptische Vorrichtung 1 kann gemäß einer Variante ein in dem Sichtkanal 2 sichtbares, insbesondere in den einen Sichtkanal 2 eingeblendetes, besonders bevorzugt eingespiegeltes Display 5 aufweisen. Für den Fall, dass die fernoptische Vorrichtung 1 zwei Sichtkanäle 2, 3 aufweist, kann es vorgesehen sein, dass in jeden der Sichtkanäle 2, 3 je ein Display eingeblendet wird. Besonders bevorzugt handelt es sich bei dem Display 5 um ein LCoS-Display (LCoS = Liquid Crystal on Silicon), ein LCD- oder ein LED-Matrix Display.

Das Display 5 kann über einen Display Treiber 6 von einer Steuerung 7 der fernoptischen Vorrichtung 1 angesteuert werden. Bei der Steuerung 7 handelt es sich bevorzugt um eine programmierbare Schaltung, beispielsweise in Form eines Prozessors. Die auf dem Display 5 dargestellten Informationen können beispielsweise in den Sichtkanal 2 eingespiegelt werden.

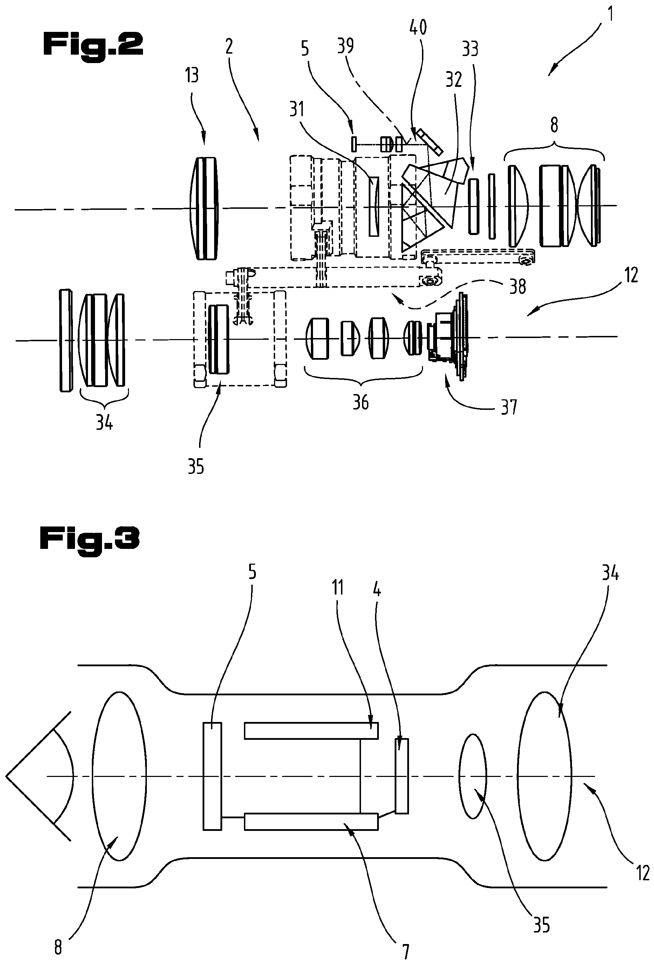

Ein Benutzer kann gemäß einer möglichen Ausführungsform bei einem Blick durch ein Okular 8 des Sichtkanals 2 die Überlagerung eines Bildes eines entfernten Objektes und einer von dem Display 5 erzeugten Anzeige sehen. Die Anzeige des Displays 5 kann über ein Anzeigen-Prisma 9 in einen Strahlengang des Sichtkanals 2 und dann in das Auge eines Benutzers gelangen. Dabei können die von dem Display 5 kommenden Lichtstrahlen an einer diagonal verlaufenden Grenzfläche 10 des als Strahlenteilerwürfel ausgebildeten Anzeigen-Prismas 9 durch Reflexion um 90° umgelenkt und so in Richtung auf das Okular 8 und in den Strahlengang des Sichtkanals 2 geleitet oder über eine teildurchlässige Grenzfläche eines Prismas eines Prismen-Umkehrsystems 32 in den Strahlengang eingekoppelt werden (Fig. 2).

Zur Energieversorgung kann die fernoptische Vorrichtung 1 einen Energiespeicher 11, beispielsweise in Form mindestens eines Akkus oder Akkupacks oder in Form mindestens einer Batterie, aufweisen.

Aus Gründen der Übersichtlichkeit sind in Fig. 1 die optischen Komponenten der Sichtkanäle 2, 3 und eines den Bilderfassungssensor 4 bzw. die Kamera umfassenden Kamerakanals 12 nicht näher dargestellt.

In Fig. 2 wird ein möglicher nicht einschränkender weiterer Aufbau beschrieben, wobei auch andere Aufbauten als der beschriebene möglich sind. Der Sichtkanal 2 kann ein Objektiv 13, eine Fokussierlinse 31, ein durch Prismen gebildetes Umkehrsystem 32, eine Feldlinse 33 und ein Okular 8 aufweisen. Durch die genannten optischen Elemente kann in dem Sichtkanal 2 ein erster Strahlengang zur vergrößerten Darstellung eines entfernten Gegenstands gebildet werden. Andererseits kann mit dem Kamerakanal 12 ein zweiter Strahlengang ausgebildet sein, dessen optische Elemente können gemäß einer beispielhaften Ausführungsform ein Objektiv 34, eine Fokussierlinse 35, ein Okular 36 und den Bilderfassungssensor 4 bzw. die Kamera oder ein Kameramodul 37 umfassen. Das Objektiv 34, die Fokussierlinse 35 und das Okular 36 des Kamerakanals 12 können gemeinsam ein afokales Linsensystem bilden. Das Kameramodul 37 bzw. die Kamera kann vorzugsweise als Einheit mit dem elektronischen Bilderfassungssensor 4, einem eigenen Objektiv und mit einer integrierten Autofokusfunktion gebildet sein. Der Sichtkanal 2 und der Kamerakanal 12 können mittels einer Verstellmechanik 38 derart miteinander gekoppelt sein, dass ein in dem Sichtkanal 2 betrachteter erster Bildausschnitt einem von dem Kameramodul 37 aufgenommenen zweiten Bildausschnitt weitgehend entspricht. Falls die fernoptische Vorrichtung 1 einen zweiten Sichtkanal 3 aufweist, kann dieser optisch gleich aufgebaut sein wie der Sichtkanal 2.

Von dem Display 5 kommende Lichtstrahlen 39 können über eine Anzeigeoptik 40 in das Prismen-Umkehrsystem 32 gelenkt und über eine teildurchlässige Grenzfläche eines Prismas des Prismen-Umkehrsystems 32 in den Strahlengang des Sichtkanals 2 eingekoppelt werden.

Bei einem Okular, Objektiv, einer Fokussier- oder Feldlinse kann es sich sowohl um eine Einzellinse, ein Kittglied aus zwei Linsen als auch um eine Ansammlung mehrerer Linsen handeln.

Auch wenn die dargestellte Ausführungsform mindestens einen Sichtkanal 2 umfasst, so sind auch Ausführungsformen möglich, bei welchen kein direkter Sichtkanal 2, 3 und stattdessen nur der Kamerakanal 12 vorhanden ist, wie in Fig 3 als digitales Zielfernrohr dargestellt. Eine Ausgabe des aktuell beobachteten Bildes und sämtlicher Zusatzinformationen erfolgt dabei auf einem Display 5 der fernoptischen Vorrichtung 1. Das Display 5 ist hierbei direkt im Okular 8 der fernoptischen Vorrichtung 1 angeordnet. Ein Beobachter bzw. Benutzer sieht dabei ein aktuell mit der fernoptische Vorrichtung 1 betrachtetes Objekt bzw. aktuell betrachtete Objekte durch einen Blick durch das Okular 8 auf das Display 5, auf welchem das aktuell erfasste Bild dargestellt wird, wobei das Okular 8 das Display 5 auch vergrößert erscheinen lassen kann. Auch bei der in Fig. 3 dargestellten Variante kann der Kamerakanal 12 eine Fokussierlinse 35 sowie einen Energiespeicher 11 und eine Steuerung 7 aufweisen.

Weiters sei darauf hingewiesen, dass falls nur der Kamerakanal 12 vorhanden ist, in dem Kamerakanal 12 weitere optische Komponenten angeordnet sein können, wie beispielsweise eine, insbesondere Linsen umfassende, verstellbare Vergrößerungsoptik, etc. Auf diese Weise lässt sich beispielsweise auch bei Verwendung nur des Kamerakanals 12 auf einfache Weise beispielsweise ein Zielfernrohr, Teleskop, Monokular oder Spektiv mit einer optischen Zoomfunktion realisieren.

Auch bei Vorhandensein eines Sichtkanals 2 oder zweier Sichtkanäle 2, 3 kann die Darstellung eines betrachteten Objekts alternativ oder zusätzlich auf einem nicht in einem Sichtkanal 2, 3 sondern an einer Außenseite der fernoptischen Vorrichtung 1 angeordneten Display erfolgen.

Gemäß einer weiteren Ausführungsform können alternativ oder zusätzlich zu den oben genannten Ausführungsbeispielen mindestens ein Sichtkanal 2, 3 und der Kamerakanal 12 teilweise zusammenfallen. Hierbei kann beispielsweise ein Teil eines über den Sichtkanal 2, 3 einfallenden Lichtbündels aus dem Sichtkanal 2, 3 ausgekoppelt werden, beispielsweise mittels eines Strahlteilers, und zu dem Bilderfassungssensor 4 bzw. zu der Kamera oder Kameramodul zur Bilderfassung geleitet werden.

Zum Ausführen von Aktionen, beispielsweise zum Bestätigen von Eingaben, Vor- und Zurückscrollen in einem auf dem Display 5 dargestellten Menü, etc. können eine oder mehrere elektronische Bedienelemente 14, 15, 16 beispielsweise Bedientasten, vorgesehen sein.

Weiter kann die fernoptische Vorrichtung mehrere Sensoren 17, 18, 19, 20, umfassen, wie einen Geopositionserfassungssensor 17, insbesondere einen GPS, GLONASS, Galileo- oder Beidou-Empfänger. Weiters hat es sich als besonders günstig herausgestellt, wenn die fernoptische Vorrichtung auch einen Helligkeitssensor 18, einen elektronischen Kompass 19, einen Neigungs- und/oder Gyrosensor 20, beispielsweise ein Gyroskop aufweist.

Darüber hinaus kann die fernoptische Vorrichtung 1 einen oder mehrere Speicher 21, auf welchen die Steuerung 7 zugreifen kann, aufweisen. In einem Teilbereich dieses Speichers 21 können beispielsweise Bilder abgelegt sein, während in anderen Teilbereichen Anwendungsprogramme gespeichert sein könne, die bei Bedarf in einen Arbeitsspeicher der Steuerung 7 geladen werden können. Auch können Teilbereiche des Speichers 21 von den Sensoren 17, 18, 19, 20 aufgezeichnete Daten enthalten.

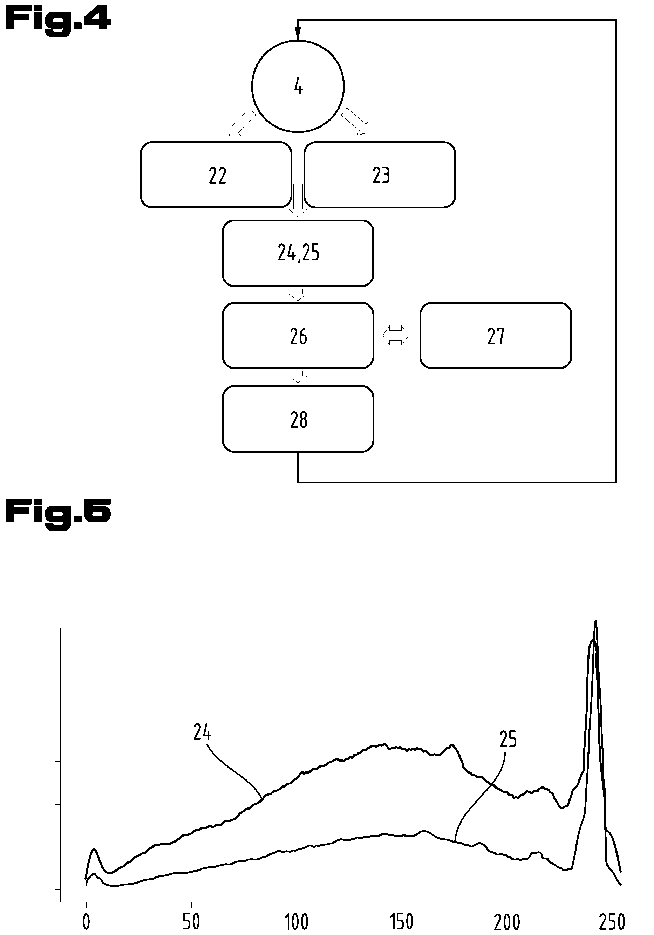

Die fernoptische Vorrichtung 1 ist dazu eingerichtet, ein mit der fernoptische Vorrichtung 1 aufgezeichnetes Referenzbild 22 mit einem aktuell erfassten Bild 23 auf Ähnlichkeit zu vergleichen und zumindest ein Maß für die Ähnlichkeit des aktuell erfassten Bildes 23 mit dem Referenzbild 22 zu berechnen, wie dies in Fig. 4 dargestellt ist.

Folgender Ablauf bzw. Verfahren ist dabei vorgesehen (Fig. 4):

1. Aufnahme eines (oder mehrerer) Referenzbildes 22 mit der Kamera 4;

2. (laufende) Aufnahme aktueller Bilder 23 mit der Kamera 4;

3. Konvertieren der Bilder 22, 23 in Graustufenbilder (bei monochromen Bildern wie zum Beispiel bei Infrarotbildern entfällt dieser Schritt);

4. Bestimmung der Histogramme 24, 25 des Referenzbildes 22 und der aktuell aufgenommen Bilder 23;

5. Zur Verbesserung der nachfolgenden Korrelationsberechnung kann es in einem Zwischenschritt hilfreich sein, die zuvor im Schritt 3 bestimmten Histogramme zu normalisieren und/oder zu glätten;

6. Berechnung des Korrelationskoeffizienten 26 zwischen Histogramm 24 des Referenzbildes 22 und Histogramm 25 des aktuellen Bildes 23;

7. Vergleich des Korrelationskoeffizienten 26 mit einem Grenzwert 27;

8. Ausgabe eines Hinweises 28 am Display 5, falls der Korrelationskoeffizient 26 größer oder kleiner als der Grenzwert 27 ist;

9. Wiederholen des Vorganges ab Schritt 2.

Zur Aufzeichnung des Referenzbildes 22 kann der Bildsensor 4 bzw. die Kamera und/oder das Kameramodul 37 verwendet werden. Die Aufzeichnung kann beispielsweise bei Betätigung eines der Bedienelemente 14, 15, 16 erfolgen. Das aufgezeichnete Referenzbild 22 kann in dem Speicher 21 abgelegt werden. Die fernoptische Vorrichtung 1 kann beispielsweise dazu eingerichtet sein, das Referenzbild 22 nach Eingabe eines Befehls, beispielsweise durch Betätigung eines der Bedienelemente 14, 15, 16 in dem internen Speicher 21 der fernoptischen Vorrichtung 1 zu speichern.

Die Aufnahme des aktuellen Bildes 23 kann ebenfalls mittels des Bildsensors 4 erfolgen. Der Vergleich des aktuellen Bildes 23 mit dem gespeicherten Referenzbild 22 kann von der Steuerung 7 durchgeführt werden. Die kontinuierliche Erfassung des aktuellen Bildes 23 und der Vergleich mit dem Referenzbild 22 kann ebenfalls nach Eingabe eines Befehls und/oder Ausführen einer Aktion, wie beispielsweise einem Verschwenken der fernoptischen Vorrichtung 1 oder Betätigung eines der Bedienelemente 14, 15, 16 ausgelöst werden.

Die fernoptische Vorrichtung 1 bzw. die Steuerung 7, kann wie aus Fig. 4 und 5 ersichtlich ist, dazu eingerichtet sein, eine erste Häufigkeitsverteilung 24 von Werten zumindest eines charakteristischen Bildparameters in dem Referenzbild 22 und eine zweite Häufigkeitsverteilung 25 von Werten des zumindest einen charakteristischen Bildparameters in dem aktuell erfassten Bild 23 zu ermitteln und die beiden Häufigkeitsverteilungen 24 und 25 miteinander zu vergleichen. Die fernoptische Vorrichtung 1 kann weiters dazu eingerichtet sein, einen Korrelationskoeffizienten 26 aus dem aktuell erfassten Bild 23 und dem Referenzbild 22 als Maß für die Ähnlichkeit dieser Bilder zu berechnen. Der Korrelationskoeffizient 26 kann aus den Häufigkeitsverteilungen 24 und 25 auf an sich bekannte Weise ermittelt werden.

Der Vergleich des aktuell aufgezeichneten Bildes 23 und des Referenzbildes 22 kann kontinuierlich erfolgen. So kann beispielsweise während eines Verschwenkens der fernoptischen Vorrichtung 1 permanent überprüft werden, ob das in einer aktuellen Winkelstellung erfasste Bild 23 mit dem gespeicherten Referenzbild 22 übereinstimmt. Es versteht sich hierbei von selbst, dass auch, wenn ein Vergleich von Einzelbildern auf Ähnlichkeit erfolgt, hierbei eine Vielzahl von aktuell erfassten Bildern 21 mit dem gespeicherten Bild 22 verglichen wird.

An dieser Stelle sei darauf hingewiesen, dass in dem vorliegenden Zusammenhang unter einer Übereinstimmung des aktuell erfassten Bildes 23 und des gespeicherten Bildes 22 zu verstehen ist, dass das Maß für die Ähnlichkeit der beiden Bilder 22, 23 den vorgegebenen Wert 27 erreicht oder überschreitet.

Als charakteristische Bildparameter können Graustufen- und/oder Farbwerte der Bilder bzw. Graustufen- und /oder Farbwerte der einzelnen Pixel der Bilder 22, 23 herangezogen werden. Für das aktuell erfasste Bild 23 und das Referenzbild 22 kann je eine Häufigkeitsverteilung 24, 25, beispielsweise in Form eines Histogramms der Graustufen (Helligkeitswerte, Intensitätswerte) bzw. Farbwerteverteilung erzeugt werden. Unter Histogrammen versteht man somit eine Auflistung der Häufigkeit, wie oft ein bestimmter Helligkeitswert eines Bildes (bei 8-Bit Graustufenbildern sind dies 256 Intensitätsstufen, bei 8-Bit Farbbildern je 256 Stufen pro Farbe) im Gesamtbild vorkommt (grafische Darstellung dazu in Fig. 5). Das Integral über die Verteilungsfunktion aller möglichen Farbwerte bzw. Graustufenwerte des Bildes 22, 23 ergibt die Gesamtzahl der Pixel in dem Bild 22, 23. Bei Farbbildern kann in einem RGB Farbraum ein Graustufenbild zum Beispiel aus dem einfachen Mittelwert der einzelnen Farbanteile ((R+G+B)/3) oder nach der Luminanz Methode über eine gewichtete Summe (Grauwert = Luminanz y = 0,3 × R + 0,59 × B + 0,11 × B) bestimmt werden oder es können zur Vereinfachung auch nur einzelne Farbkanäle (R oder G oder B) als Basis für das Histogramm verwendet werden. Falls ein HSV Farbraum vorliegt, so kann als Graustufenbild entweder der Farbwert H (Hue) oder die Farbsättigung S (Saturation) oder der Hellwert V (Value) herangezogen werden.

Liegen Bilder vor, welche nicht den vollen Umfang aller möglichen Helligkeitswerte aufweisen (zum Beispiel kann bei 8-Bit Bildern der minimale Helligkeitswert größer 0 und/oder der maximale kleiner 255 sein), so kann eine Histogrammnormalisierung hilfreich sein. Dabei werden der dunkelste Bildpunkt $I_{min}$ auf 0 ($I_{min'}$) und der hellste ($I_{max}$) auf den höchstmöglichen Helligkeitswert (($I_{max'}$, 255 bei 8-Bit Bildern) abgebildet und alle dazwischen liegenden linear verteilt. Durch diese Streckung der X-Achse wird der gesamte verfügbare Wertebereich des Histogramms optimal ausgenützt. Die Berechnung der neuen Helligkeitswerte 1' aus den aktuellen Helligkeitswerten 1 erfolgt dabei folgendermaßen:

$$I' = (I_{max'} - I_{min'}) \frac{I - I_{min}}{I_{max} - I_{min}} + I_{min'}$$

Für den Fall, dass $I_{min'}$ = 0 und $I_{max'}$ = 255 ist, vereinfacht sich diese Formel auf:

$$I' = 255 \frac{I - I_{min}}{I_{max} - I_{min}}$$

Ebenfalls kann es hilfreich sein, die Histogramme vor der Berechnung des Korrelationskoeffizienten zu glätten. Die Glättung erfolgt dabei durch die Anwendung hinlänglich bekannter Filter, wie zum Beispiel eines Savitzky-Golay Filters, auf welche hier aber nicht näher eingegangen werden. Wenn der Korrelationskoeffizient 26, d.h. das Maß der Ähnlichkeit der beiden Häufigkeitsverteilungen 24, 25, einen vorgegebenen Wert 27 erreicht oder überschreitet oder auch unterschreitet, ist die fernoptische Vorrichtung 1 dazu eingerichtet, einen Hinweis 28 für einen Benutzer auszugeben.

Fig. 5 zeigt ein Beispiel für eine Häufigkeitsverteilung 24 (Histogramm) von Grauwerten des Referenzbildes 22 und eine Häufigkeitsverteilung 25 der Grauwerte des aktuell erfassten Bildes 23. Auf der Ordinatenachse ist der Farbwert bzw. Grauwert und auf der Abszissenachse ist die Anzahl oder der relative Anteil der Pixel bzw. Bildpunkte aufgetragen.

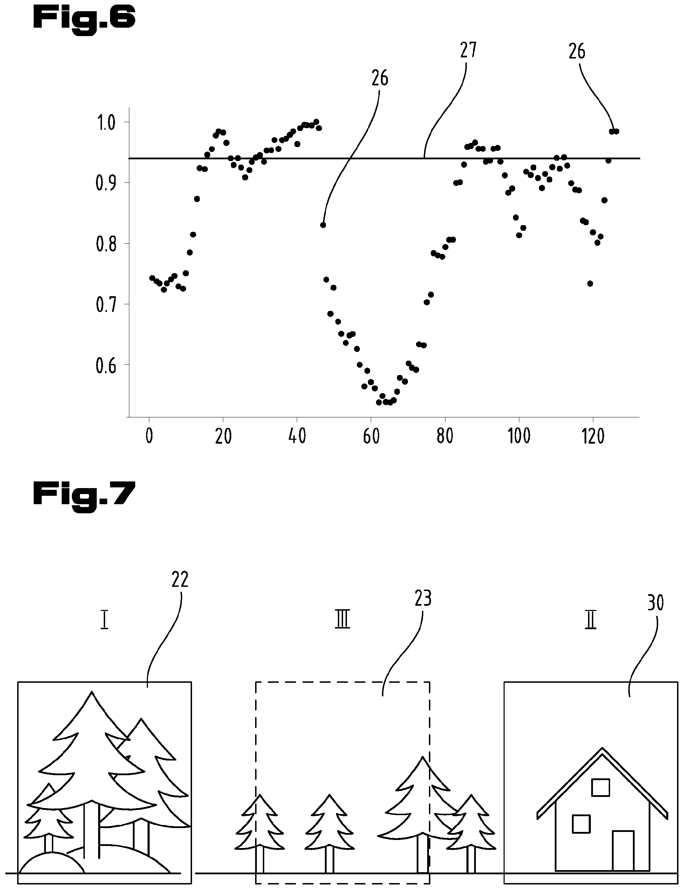

In Fig. 6 entspricht jeder Punkt jeweils einem Korrelationskoeffizienten 26 zwischen einem aktuell erfassten Bild 23 aus einer Reihe von kontinuierlich erfassten aktuellen Bildern 23 und dem Referenzbild 22. Somit entspricht jeder Punkt in Fig. 6 einem Korrelationskoeffizienten 26, der aus den Häufigkeitsverteilungen 24 und 25 eines aktuell aufgezeichneten Bildes 23 und dem Referenzbild 22 laufend ermittelt wird. Auf der Ordinatenachse sind die Korrelationskoeffizienten 26 und auf der Abszissenachse die einzelnen aktuell erfassten Bilder 23 aufgetragen, was bei einer konstanten Bildrate einer Zeitachse entspricht.

Wie aus der klassischen Statistik hinlänglich bekannt, beschreibt der Korrelationskoeffizient, wie stark zwei Variablen zueinander korrelieren, wie sie also (linear) zusammenhängen und somit, wie ähnlich sie zueinander sind. Der Korrelationskoeffizient R kann Werte zwischen -1 und +1 einnehmen, wobei R = 0 bedeutet, dass kein Zusammenhang vorliegt. Je näher R an -1 (negative Korrelation) bzw. +1 (positive Korrelation) liegt, desto stärker ist der Zusammenhang der zwei Variablen, desto ähnlicher sind sie sich somit. Die Ähnlichkeit zweier Bilder kann daher berechnet werden über die Berechnung des Korrelationskoeffizienten R aus der Korrelation der zugehörigen Histogramme H:

$$R_{22,23} = \frac{\sum\left[\left(H_{22,i} - \bar{H}_{22}\right)\left(H_{23,i} - \bar{H}_{23}\right)\right]}{\sqrt{\sum\left(H_{22,i} - \bar{H}_{22}\right)^2 \times \sum\left(H_{22,i} - \bar{H}_{22}\right)^2}}$$

Wobei gilt:

$R_{22,23}$    Korrelationskoeffizient zwischen dem Histogramm des Referenzbildes 22 und dem Histogramm des aktuellen Bildes 23

$H_{22,i}$    i-tes Element des Histogramms des Referenzbildes 22

$H_{23,i}$    i-tes Element des Histogramms des aktuellen Bildes 23

$\bar{H}_{22}$    Mittelwert des Histogramms des Referenzbildes 22

$\bar{H}_{23}$    Mittelwert des Histogramms des aktuellen Bildes 23

Die Erzeugung eines entsprechenden Signals bei Übereinstimmung des aktuell erfassten Bildes 23 und des Referenzbildes 22, welches dann in einen für einen Benutzer wahrnehmbaren Hinweis umgewandelt wird, kann von der Steuerung 7 erfolgen. Der Hinweis kann ein optischer und/oder akustischer und/oder haptischer und/oder mechanisch und/oder elektromechanisch generierter Hinweis sein.

Im Fall eines optischen Hinweises kann der Hinweis auf dem Display 5 dargestellt werden. Beispielsweise kann im Falle einer Übereinstimmung der Bilder 22 und 23 ein färbiger Rahmen um das aktuell in dem Sichtkanal 2 eingeblendeten oder sichtbaren Displays 5 werden.

Alternativ oder zusätzlich kann, solange keine Übereinstimmung zwischen dem aktuell erfassten Bild 22 und dem als Referenz gespeicherten Bild 22 keine Übereinstimmung gegeben ist, auf dem Display 5 ein Rahmen um das aktuell erfasste Bild 22 in einer ersten Farbe, beispielsweise rot, und sobald das aktuell erfasste Bild 23 mit dem gespeicherten Bild 22 übereinstimmt, ein andersfärbiger Rahmen, beispielsweise in grüner Farbe, oder ein anderer visueller Hinweis eingeblendet werden.

Alternativ oder zusätzlich zu der optischen Ausgabe des Hinweises 28 kann auch eine haptischer oder akustische Ausgabe des Hinweis 28 erfolgen. Zur Erzeugung eines derartigen Hinweises 28 kann die Steuerung 7 gemäß Fig. 1 mit einem Hinweisgenerator 29, beispielsweise einem mechanischen und/oder elektromechanischen Hinweisgenerators, verbunden sein. Der Hinweisgenerator 29 kann beispielsweise einen Lautsprecher umfassen und ein akustisches Signal, beispielsweise in Form eines Pfeiftons, im Fall einer Übereinstimmung des aktuell erfassten Bildes 23 und des Referenzbildes 22 ausgeben. Alternativ oder zusätzlich kann der Hinweisgenerator 29 einen Vibrationsmechanismus umfassen, der im Fall einer Übereinstimmung des aktuell erfassten Bildes 23 und des Referenzbildes 22 eine für den Benutzer wahrnehmbare Vibration erzeugt. Auch wäre es denkbar, dass der Hinweisgenerator 29 eine Rotationsmasse umfasst, deren Rotationszustand im Falle einer Übereinstimmung des aktuell erfassten Bildes 23 und des Referenzbildes 22 geändert wird und eine wahrnehmbare Veränderung eines Kipp- und/oder Verdreh- und/oder Schwenkwiderstandes der fernoptischen Vorrichtung 1 erzeugt. So kann die Rotationsmasse im Falle einer nicht Übereinstimmung des aktuell erfassten Bildes 23 und des Referenzbildes 22 beispielsweise in einem Ruhezustand verharren und im Fall einer Übereinstimmung des aktuell erfassten Bildes 23 mit dem Referenzbild 22 mittels eines von der Steuerung 7 betätigten Antriebs in Rotation versetzt werden.

Gemäß Fig. 7 kann es vorgesehen sein, dass das aktuell erfasste Bild 23 mit zwei davor aufgezeichneten Referenzbildern 22, 30 auf Ähnlichkeit bzw. Übereinstimmung zu vergleichen. Der Vergleich zwischen den aktuell erfassten Bild 23 und den beiden Referenzbildern 22, 30 erfolgt gleich wie bei einem Vergleich mit nur einem Referenzbild 22 nur mit dem Unterschied, dass zwei Ähnlichkeitsvergleiche durchgeführt werden. D.h. jedes aktuell erfasste Bild 23 wird jeweils mit beiden Referenzbildern 22, 30 verglichen.

Wenn das Maß für die Ähnlichkeit des aktuell erfassten Bildes 23 mit einem der beiden Referenzbilder 22, 30 den vorgegebenen Wert 27 überschreitet, wird wie bei den vorhergehenden Ausführungsformen der Hinweis 28 ausgegeben. Die Ausgabe und Generierung des Hinweises 28 erfolgt gleich, wie bei nur einem Referenzbild 22. Diese Weiterbildung der Erfindung ermöglicht es, einen zwischen den beiden Referenzbildern 22, 30 liegenden Bereich III zu definieren, wobei die Grenzen des Bereichs III jeweils einem Referenzbild 22, 30 entsprechen. Das hat den Vorteil, dass beispielsweise ein zwischen den Referenzbildern 22, 30 liegender Bereich III beispielsweise als "sicherer" Bereich festgelegt werden kann, innerhalb dessen ein Schütze ohne Gefahr für Dritte einen Schuss abgeben kann. Dies kann insbesondere bei Drückjagden, bei welchen auch Treiber zum Einsatz kommen, von Bedeutung sein.

In Fig. 7 entspricht die linke Bereichsgrenze I dem ersten Referenzbild 22 und die rechte Bereichsgrenze II dem zweiten Referenzbild 30. Der dazwischen liegende Bereich III stellt hierbei den "sicheren" Bereich dar. In diesem Zusammenhang wird bei der Aufzeichnung des aktuellen erfassten Bildes 23 zusätzlich die Bewegungsrichtung (Schwenkrichtung) erfasst, um den die fernoptische Vorrichtung 1 verschwenkt wird, um feststellen zu können, ob bei Vorliegen einer Ähnlichkeit mit dem Referenzbild 22 vom Bereich I in den Bereich III hinein oder vom Bereich III hinaus in den Bereich I oder bei Vorliegen einer Ähnlichkeit mit dem Referenzbild 30 vom Bereich II in den Bereich III hinein oder vom Bereich III hinaus in den Bereich II geschwenkt wird.

Die Bestimmung der Schwenkrichtung beim Überschreiten einer Bereichsgrenze 22, 30 kann über eine laufende Auswertung der Änderung der durch den Kompass 19 bestimmten Ausrichtung und/oder durch die durch das Gyroskop 20 bestimmte und vorzeichenbehaftet Drehrate erfolgen.

Bei einem Schwenken über die durch die beiden gespeicherten Bilder 22, 30 definierten Bereichsgrenzen I, II hinaus kann der Hinweis für den Benutzer permanent bzw. so lange erzeugt werden, bis er die fernoptische Vorrichtung 1 so verschwenkt, dass eine optische Achse der fernoptischen Vorrichtung 1 wieder in den zwischen den beiden Bereichsgrenzen I, II liegenden Bereich III weist. Da dabei die Richtung der Schwenkbewegung bei Verlassen des Bereiches III bzw. bei Überschreiten der Grenzen I oder II bekannt ist, kann dem Nutzer auch angezeigt werden, in welche Richtung er zurückschwenken muss, um wieder im Bereich III zu landen. Alternativ oder zusätzlich kann dem Benutzer angezeigt werden, dass er sich mit seiner momentanen durch die Ausrichtung der fernoptischen Vorrichtung 1 definierten Blickrichtung in dem erlaubten Bereich III befindet. Beispielsweise kann solange der Benutzer den erlaubten Bereich beobachtet, ein entsprechender optischer Hinweis auf dem Display 5 ausgegeben werden.

**Bezugszeichenaufstellung**

| | | | |
|---|---|---|---|
| 1 | Fernoptische Vorrichtung | 32 | Prismen-Umkehrsystem |
| 2 | Sichtkanal | 33 | Feldlinse |
| 3 | Sichtkanal | 34 | Objektiv |
| 4 | Bilderfassungssensor | 35 | Fokussierlinse |
| 5 | Display | 36 | Okular |
| 6 | Treiber | 37 | Kameramodul |
| 7 | Steuerung | 38 | Verstellmechanik |
| 8 | Okular | 39 | Lichtstrahlen |
| 9 | Anzeigen-Prisma | 40 | Anzeigeoptik |
| 10 | Grenzfläche | | |
| 11 | Energiespeicher | | |
| 12 | Kamerakanal | | |
| 13 | Objektiv | | |
| 14 | Bedienelement | | |
| 15 | Bedienelement | | |
| 16 | Bedienelement | | |
| 17 | Geopositionserfassungssensor | | |
| 18 | Helligkeitssensor | | |
| 19 | Kompass | | |
| 20 | Neigungs- und/oder Gyrosensor | | |
| 21 | Speicher | | |
| 22 | Referenzbild | | |
| 23 | Bild | | |
| 24 | Häufigkeitsverteilung | | |
| 25 | Häufigkeitsverteilung | | |
| 26 | Korrelationskoeffizient | | |
| 27 | Wert | | |
| 28 | Hinweis | | |
| 29 | Hinweisgenerator | | |

30 Referenzbild
31 Fokussierlinse

**Patentansprüche**

1. Fernoptische Vorrichtung (1), insbesondere in Form eines binokularen oder monokularen Fernrohrs, eines Spektivs, eines Teleskopes, Zielfernrohrs, Nachtsichtgerätes oder Entfernungsmessers, **dadurch gekennzeichnet, dass** die fernoptische Vorrichtung dazu eingerichtet ist, zumindest ein mit der fernoptischen Vorrichtung aktuell erfasstes Bild (23) mit zumindest einem davor mit der fernoptischen Vorrichtung aufgezeichneten Referenzbild (22) auf Ähnlichkeit zu vergleichen und zumindest ein Maß für die Ähnlichkeit des zumindest eine aktuell erfassten Bildes (23) mit dem zumindest einen Referenzbild (22) zu berechnen und, wenn das zumindest eine Maß der Ähnlichkeit zumindest einen vorgegebenen Wert (27) erreicht oder überschreitet oder unterschreitet, zumindest einen Hinweis (28) für einen Benutzer auszugeben.

2. Fernoptische Vorrichtung nach Anspruch 1, **dadurch gekennzeichnet, dass** der zumindest eine Hinweis (28) ein optischer und/oder akustischer und/oder haptischer und/oder mechanisch und/oder elektromechanisch generierter Hinweis ist.

3. Fernoptische Vorrichtung nach Anspruch 1 oder 2, **dadurch gekennzeichnet, dass** sie dazu eingerichtet ist, das zumindest eine aktuell erfasste Bild (23) mit zumindest zwei davor aufgezeichneten Referenzbildern (22, 30) auf Ähnlichkeit zu vergleichen und, wenn das zumindest eine Maß für die Ähnlichkeit des zumindest einen aktuell erfassten Bildes (23) mit einem der beiden Referenzbilder (22, 30) den zumindest einen vorgegebenen Wert (27) überschreitet oder unterschreitet, den Hinweis auszugeben.

4. Fernoptische Vorrichtung nach Anspruch 3, **dadurch gekennzeichnet, dass** ein erstes Referenzbild (22) der zumindest zwei Referenzbilder (22, 30) eine erste Grenze (I) eines Bereichs (III) definiert und ein zweites Referenzbild (30) der zumindest zwei Referenzbilder (22, 30) eine zweite Grenze (II) des Bereichs (III) definiert.

5. Fernoptische Vorrichtung nach Anspruch 4, **dadurch gekennzeichnet, dass** sie dazu eingerichtet ist, zu bestimmen, ob das aktuell erfasste Bild (23) inner- oder außerhalb des Bereichs (III) liegt.

6. Fernoptische Vorrichtung nach Anspruch 5, **dadurch gekennzeichnet, dass** sie dazu eingerichtet ist, einen Hinweis zu generieren, ob sich das zumindest eine aktuell erfasste Bild (23) inner- oder außerhalb des Bereichs (III) befindet

7. Fernoptische Vorrichtung nach einem der Ansprüche 1 bis 6, **dadurch gekennzeichnet, dass** sie zumindest einen elektronischen Bilderfassungssensor, insbesondere in Form eines CCD- und/oder CMOS- und/oder Infrarotsensors, beispielsweise in Form eines Microbolometer-Sensors, aufweist.

8. Fernoptische Vorrichtung nach einem der Ansprüche 1 bis 7, **dadurch gekennzeichnet, dass** die fernoptische Vorrichtung (1) dazu eingerichtet ist, zumindest eine erste Häufigkeitsverteilung (24) von Werten zumindest eines charakteristischen Bildparameters in dem zumindest einen Referenzbild (22) und zumindest eine zweite Häufigkeitsverteilung (25) von Werten des zumindest einen charakteristischen Bildparameters in dem zumindest einen aktuell erfassten Bild (23) zu ermitteln und die beiden Häufigkeitsverteilung (24, 25) miteinander zu vergleichen.

9. Fernoptische Vorrichtung nach einem der Ansprüche 1 bis 8, **dadurch gekennzeichnet, dass** sie dazu eingerichtet ist, zumindest einen Korrelationskoeffizienten (26) aus der Häufigkeitsverteilung (24) des zumindest einen Referenzbildes (22) und der Häufigkeitsverteilung (25) des zumindest einen aktuell erfassten Bildes (23) als Maß für die Ähnlichkeit des zumindest einen Referenzbildes (23) mit dem zumindest einen aktuell erfassten Bild (22) zu berechnen.

10. Fernoptische Vorrichtung nach Anspruch 8 oder 9, **dadurch gekennzeichnet, dass** die fernoptische Vorrichtung (1) dazu eingerichtet ist, die zumindest eine erste Häufigkeitsverteilung (24) und die zumindest eine zweite Häufigkeitsverteilung (25) je in Form eines Histogramms zu berechnen.

11. Fernoptische Vorrichtung nach einem der Ansprüche 8 bis 10, **dadurch gekennzeichnet, dass** der zumindest eine charakteristische Bildparameter ein Graustufen- und/oder Farbwert eines einzelnen Bildpunktes ist.

12. Fernoptische Vorrichtung nach einem der Ansprüche 1 bis 11, **dadurch gekennzeichnet, dass** die fernoptische Vorrichtung (1) dazu eingerichtet ist, aus dem zumindest einen Referenzbild (22) und aus dem zumindest einen aktuell erfassten Bild (23) je ein Graustufenbild zu ermitteln.

13. Fernoptische Vorrichtung nach einem der Ansprüche 1 bis 12, **dadurch gekennzeichnet, dass** sie zumindest eine Betätigungsvorrichtung (14, 15, 16) aufweist, um eine Aufnahme des zumindest einen Referenzbildes (22) auszulösen.

14. Fernoptische Vorrichtung nach Anspruch 13, **dadurch gekennzeichnet, dass** sie dazu eingerichtet ist, das zumindest eine Referenzbild (22), insbesondere nach Eingabe eines Befehls zum Speichern des zumindest einen Referenzbildes (22), in einem internen Speicher (21) der fernoptischen Vorrichtung (1) zu speichern.

15. Fernoptische Vorrichtung nach einem der Ansprüche 1 bis 14, **dadurch gekennzeichnet, dass** sie dazu eingerichtet ist, nach Eingabe eines Befehls und/oder Ausführen einer Aktion, wie beispielsweise einem Verschwenken der fernoptischen Vorrichtung kontinuierlich aktuell erfasste Bilder (23) aufzuzeichnen und mit dem zumindest einen Referenzbild (22) zu vergleichen.

16. Fernoptische Vorrichtung nach einem der Ansprüche 1 bis 15, **dadurch gekennzeichnet, dass** sie zumindest ein Objektiv (13) und zumindest ein Okular (8) aufweist.

17. Fernoptische Vorrichtung nach einem der Ansprüche 1 bis 16, **dadurch gekennzeichnet, dass** sie eine Ausgabeeinheit zur Ausgabe des Hinweises aufweist, insbesondere in Form einer durch das Okular (8) sichtbaren elektrooptischen Anzeigevorrichtung, bevorzugt in Form eines Displays (5), aufweist.

18. Fernoptische Vorrichtung nach einem der Ansprüche 1 bis 17, **dadurch gekennzeichnet, dass** sie zumindest eine Steuerung (7), insbesondere in Form eines Prozessors, aufweist, die dazu eingerichtet ist, das Maß für die Ähnlichkeit des zumindest einen aktuell erfassten Bildes (23) und des zumindest einen Referenzbildes (22) zu berechnen sowie Erzeugung und Ausgabe des Hinweises (28) zu steuern.

**Fig.1**

EP 4 382 985 A1

**Fig.2**

**Fig.3**

**Fig.4**

**Fig.5**

**Fig.6**

**Fig.7**

Europäisches Patentamt
European Patent Office
Office européen des brevets

**EUROPÄISCHER RECHERCHENBERICHT**

**Nummer der Anmeldung**

**EP 23 21 4368**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2005 057323 A1 (ZEISS CARL OPTRONICS GMBH [DE]) 6. Juni 2007 (2007-06-06) | 1-5,7, 13-18 | INV. G02B23/10 |
| Y | * Abbildung 1 * | 8-12 | |
| A | * Absatz [0007] – Absatz [0010] * | 6 | ADD. |
| | * Absatz [0023] – Absatz [0027] * | | F41G1/00 |
| | ----- | | |
| Y | DE 195 21 346 A1 (NIPPON TELEGRAPH & TELEPHONE [JP]) 21. Dezember 1995 (1995-12-21) * Seite 1 – Seite 6 * | 8-12 | |
| | ----- | | |

**RECHERCHIERTE SACHGEBIETE (IPC)**

G02B
F41G

Der vorliegende Recherchenbericht wurde für alle Patentansprüche erstellt

| Recherchenort | Abschlußdatum der Recherche | Prüfer |
|---|---|---|
| München | 11. April 2024 | Beutter, Matthias |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 23 21 4368

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-04-2024

| Im Recherchenbericht angeführtes Patentdokument | Datum der Veröffentlichung | Mitglied(er) der Patentfamilie | Datum der Veröffentlichung |
|---|---|---|---|
| DE 102005057323 A1 | 06-06-2007 | KEINE | |
| DE 19521346 A1 | 21-12-1995 | DE 19521346 A1 | 21-12-1995 |
| | | US 5638465 A | 10-06-1997 |

Für nähere Einzelheiten zu diesem Anhang : siehe Amtsblatt des Europäischen Patentamts, Nr.12/82

EPO FORM P0461